# EUROPEAN PATENT SPECIFICATION

(11) **EP 2 577 168 B1**
(45) Date of publication and mention of the grant of the patent: **20.03.2019**
(21) Application number: 11722094.7
(22) Date of filing: 31.05.2011
(51) Int. Cl.: F23M 5/02, F23D 14/32, F23L 7/00

(54) **OXY-FUEL BURNER**
SAUERSTOFF-BRENNSTOFF-BRENNER
BRÛLEUR D'OXYCARBURANTS

(30) Priority: 07.06.2010 EP 10305606
(43) Date of publication of application: 10.04.2013
(73) Proprietor: L'Air Liquide Société Anonyme pour l'Etude et l'Exploitation des Procédés Georges Claude, 75007 Paris (FR)
(72) Inventor: KALCEVIC, Robert, F-78000 Versailles (FR); BELASSE, Brenice, F-28130 Maintenon (FR); CHAILLOU, Dorothée, F-78180 Montigny Le Bretonneux (FR); FUJINUMA, Ryuji, Kanagawa, Kamakura-shi 248-0004 (JP); MULON, Jacques, F-91300 Massy (FR); PERIASAMY, Chendhil, Bear, Delaware 19701 (US); WANG, Justin Jian, Bear, Delaware 19701 (US)
(74) Representative: De Vleeschauwer, Natalie Y.L.D.
(86) International application number: PCT/EP2011/058930
(87) International publication number: WO 2011/154285

(56) References cited:
- EP-A2- 0 563 792
- FR-A1- 2 924 201
- US-A- 3 748 087
- US-A- 3 861 858
- US-A- 3 954 433

## Description

The present invention relates to oxy-fuel burners and in particular to oxy-fuel burners for use in channels transporting molten material.

In a channel in which a molten material (hereafter also referred to as the "fluid") flows or circulates, the characteristics of said molten material, such as its temperature and viscosity, need to be carefully controlled.

This is for example the case when the fluid is molten glass.

The fluid leaving the glass-melting furnace is generally transported from the melting furnace to forming or shaping equipment through channels, also known as feeders or forehearths. The temperature and hence also the temperature-related viscosity of the fluid entering the forming equipment need to be carefully controlled and substantially homogeneous, as variations in temperature/viscosity may affect the quality of the formed product.

As it flows through the channel, the fluid cools mainly by contact with the refractory materials out of which the walls of the channel are made.

It is known in the art to compensate for this cooling of the fluid. This is done by supplying thermal energy to the fluid flowing inside the channel in the vicinity of the walls. In this manner a significant temperature gradient is prevented from arising in the fluid (seen in the cross-sectional direction of the channel perpendicular to the flow direction). In particular in channels for transporting molten glass, the sources for said thermal energy usually are or comprise burners mounted in the channel walls.

Generally speaking, a burner is a device which combines a fuel and an oxidizer for combustion of the fuel with the oxidizer, thereby generating thermal energy.

Industrially important burner characteristics include the nominal power and the power range of the burner, as well as the flame shape obtained under various operating conditions.

As indicated above, in transport channels for molten material the aim of the burner is to supply thermal energy to the molten material in the vicinity of the channel wall. The burner must therefore be capable of providing, under operating conditions, a flame having a flame shape for maximizing heat transfer to the material in the vicinity of the channel wall. In this respect, it is known to use burners designed to generate a flame of which a significant portion is confined within the burner.

The nominal power of a burner is an important design and selection criterion for a burner to be used in a furnace, such as a transport channel for molten material. It corresponds to the power which the furnace designer or operator expects the burner to provide under standard/normal furnace operating conditions. At nominal power, the burner operates at optimum efficiency and maximum longevity, i.e. with minimal risk of damage to the burner and the furnace. In practice, each burner has a power range around said nominal power in which it can operate safely. For example, burners suitable for use in transport channels for molten material have a power range or operating range between 0.5 and 2.0 times the nominal power of the burner, preferably between 0.5 and 1.5 times the nominal power.

Burners used in transport channels for molten products, such as molten glass, generally comprise injectors positioned inside a block made of refractory material, said block being in turn mounted in a wall of the transport channel, so that the block outlet faces the inside of the transport channel.

The injectors, which comprise a nozzle section terminating in what is known in the art as the burner tip and having one or more injection nozzles directed towards the block outlet, are generally made out of metal, such as a combination of steel and expensive refractory material.

Consequently, in high temperature furnaces, such as glass transport channels, the burner tip needs to be positioned sufficiently away from the block outlet so as to reduce the impact of heat radiation from the transport channel onto the burner tip and nozzles. Such heat radiation can lead to thermal damage and malfunction of the tip/nozzle and of the corresponding injector.

Due to its ready availability, air is the oxidizer traditionally used. Air does, however, present the inconvenience of consisting mainly of nitrogen which does not itself contribute to the heat generation and which can give rise to pollutants known as NOx.

It is also known in the art to use oxygen-enriched air or substantially pure oxygen instead of air as the oxidizer for combustion in order to increase the energy efficiency of burners.

Combustion processes using an oxidizer having an oxygen content higher than that of air are referred to as 'oxy-fuel combustion' or, in short, 'oxycombustion'. The corresponding burners are referred to as 'oxy-fuel burners' or 'oxyburners'.

The use of oxygen enriched air or substantially pure oxygen instead of air changes the characteristics of the fuel combustion and hence the properties of the flame.

When the oxidizer for combustion is oxygen-enriched air or substantially pure oxygen, as opposed to air, the flame temperature increases substantially. The heat radiation generated by the flame is more intense and covers a different range of wavelengths, which can be more efficient for heating certain loads such as molten glass.

In the light of the differences between the properties of oxy-fuel flames compared to the properties of air-fuel flames, a number of burners have been designed specifically for use in oxycombustion.

Some examples of known burners are briefly described hereafter.

EP-A-0703410 discloses an oxy-fuel burner having a block defining a feed passage having an axis and leading into the narrow end of a burner chamber, said burner chamber having a frusto-conical transition section at its narrow end and a substantially cylindrical section at its wide end. The burner according to EP-A-0703410 can generate improved radiative heat transfer at low fuel and oxidizer injection velocities.

EP - A - 216 698 discloses a burner assembly for a glass feeder, having a cylindrical canal for supplying a premixture of air and combustible gas, said cylindrical canal terminating inside the feed passage upstream of the narrow end of the burner chamber. The burner assembly furthermore comprises a capillary tube for supplying oxygen which is coaxial with the cylindrical canal, and which terminates between the end of the cylindrical canal and the narrow end of the burner chamber. The burner assembly according to EP-A- 216 698 thus enables oxygen-enriched combustion in glass feeders.

EP-A-0563792 describes a system for heating a chamber, such as a glass melting furnace, to an elevated temperature, according to the preamble of claim 1.

As, in particular in transport channels for molten products, the atmosphere is often heavily loaded with materials, such as volatilized substances, capable of forming deposits on cooler surfaces, back flow phenomena into the burner and recirculation of exhaust gases in the burner can lead to deposits on and proximate the burner tip. As a consequence, the switch from air to oxygen-enriched air or substantially pure oxygen gives rise to an increased occurrence of reduced burner efficiency, partial or total nozzle plugging or even burner block plugging and burner damage.

It is a purpose of the present invention to provide robust burners suitable for use in transport channels for molten material, which enable the use of oxygen-rich gas and even substantially pure oxygen as the oxidizer for combustion without increased risk of thermal damage to the burner and without increased occurrence of deposits on or near the burner tip positioned within the burner block. It is also a purpose of the invention to provide methods for designing and operating such burners.

It is furthermore an aim of the present invention to provide such burners which enable the use of oxygen-rich gas or substantially pure oxygen as the oxidizer for combustion without increased occurrence of deposits on or near the burner tip when a major part of the flame (at least 50%) is confined within the burner block.

According to the present invention, this is achieved as follows.

In the method of the invention for designing a burner for combusting a fuel with an oxygen-rich oxidizer, said burner presenting a nominal power Pn and being suitable for heating molten material in a transport channel, the burner is designed to comprise a refractory block and an injector assembly.

As explained inter alia on page 343 of the publication entitled "Recueil des fiches techniques janvier 1973-mai 1980" published by Groupe d'etude des flames de gaz naturel, the («impulsion» ou « poussée de reaction in French) «injection momentum » through an injector is defined by the formula: I = Qm.Vs + (Ps-Pa).Ss, whereby:
- Qm is the mass flow rate of the fluid,
- Vs is the velocity of the fluid at the outlet section of the injector,
- Ps is the pressure of the fluid at the outlet section of the injector,
- Pa is the pressure downstream of the injector,
- Ss is the surface area of the outlet section of the injector.

The injection momentum is consequently expressed in Newtons, or units derived therefrom, such as mN.

∑If is the total injection momentum of the fuel at the nominal power Pn and ∑Iox is the total injection momentum of the oxidizer at the nominal power Pn.
The refractory block has on one side an inlet face with an inlet opening and on an opposite side an outlet face with an outlet opening.

An axis, having a total length Lt extends from the inlet opening to the outlet opening.

The refractory block defines, in succession along said axis: a feed passage, a burner chamber and optionally a terminal section.

The feed passage leads into the refractory block from the inlet opening to a downstream feed passage outlet. Lf is the length of the feed passage along the axis from the inlet opening, (which is in fact the feed passage inlet) to the feed passage outlet, whereby Lf > 0.

The injector assembly terminates in a burner tip and is mounted into the feed passage so that the burner tip coincides with the feed passage outlet.

The burner chamber has a chamber inlet, a chamber outlet and a chamber wall. The chamber inlet coincides with the feed passage outlet. The chamber wall surrounds the burner chamber and connects the chamber inlet to the chamber outlet. The chamber wall furthermore defines an angle α with the axis, said angle α being ≥ 0° and ≤ 3° throughout the burner chamber. In other words, the burner chamber is substantially cylindrical.

Lc is the length of the burner chamber along the axis from the chamber inlet to the chamber outlet, whereby Lc > 0.

Ls is the length of the optional terminal section along the axis, whereby Ls ≥ 0.

When Ls = 0, the burner does not include the optional terminal section. In that case the chamber outlet coincides with the outlet opening of the burner block.

When Ls > 0, the burner does include the optional terminal section. In that case, the terminal section has a section inlet, a section outlet and a section wall surrounding the terminal section and connecting the section inlet to the section outlet. The section inlet coincides with the chamber outlet. The section outlet coincides with the outlet opening of the burner block. The section wall defines an angle β with the axis, whereby the angle β > 4°, or even > 5°.

Furthermore, in the design method of the invention, the length Lc of the burner chamber and the length Ls of the terminal section are selected so that Lc/(Lc + Ls) > 2/3. This is obviously the case when Ls = 0, i.e. when there is no terminal section as defined above, Lc being >0.

The design method of the invention is in particular characterized in that it comprises the step of selecting (a) the burner chamber length Lc, (b) the terminal section length Ls and (c) the cross-sectional area So of the outlet opening in the plane perpendicular to the axis as a function of the total injection momentum ∑If of the fuel at the nominal power Pn and of the total injection momentum ∑Iox of the oxidizer at the nominal power Pn, so that 30 mN ≤ Ik ≤ 70 mN, whereby Ik = 0.5*(∑ If+∑Iox)*[(Lc+LS)²/So].

Advantageously, 35 mN≤Ik≤60 mN.

The angle α between the chamber wall and the axis is advantageously not greater than 2°, preferably not greater than 1°. Most preferably, the combustion chamber is a cylinder surrounding the axis, in which case the angle α = 0°.

The injector assembly typically comprises a pipe-in-pipe nozzle section comprising an oxidizer supply passage and a fuel supply passage. Pipe-in-pipe nozzle sections are nozzle sections whereby one of the reactants (i.e. fuel or oxidizer) is injected in a surrounding arrangement with respect to the injection of a second reactant (i.e. oxidizer or fuel), the two reactants coming into contact with one another downstream of the injector tip. When the injector assembly comprises a pipe-in-pipe nozzle section, the oxidizer supply passage may surround the fuel supply passage. Alternatively, the fuel supply passage may surround the oxidizer supply passage.

For optimum burner operation, the total injection momentum ∑Iox of the oxidizer at the nominal power Pn, is preferably not less than 1.6 mN and preferably not more than 4.0 mN. For a given nominal power Pn, the required total oxidizer injection momentum ∑Iox depends in particular on the nature of the fuel and the oxygen content of said oxidizer. The total injection momentum ∑If of the fuel at the nominal power Pn is preferably not less than 2.4 mN and not more than 3.2 mN. The value of ∑If depends in particular on the nature and composition of the injected fuel.

When the oxidizer is injected through a single oxidizer injection nozzle, ∑Iox is the oxidizer injection momentum Iox through said single oxidizer injection nozzle at the nominal power Pn of the burner. When the oxidizer is injected through multiple oxidizer injection nozzles, ∑Iox is the sum of the individual oxidizer injection momentums Iox through the individual oxidizer injection nozzles at the nominal power Pn of the burner. Likewise, when the fuel is injected through a single fuel injection nozzle, ∑If is the fuel injection momentum If through said single fuel injection nozzle at the nominal power Pn of the burner. When the fuel is injected through multiple fuel injection nozzles, ∑If is the sum of the individual fuel injection momentums If through the individual fuel injection nozzles at the nominal power Pn of the burner.

The distance along the axis from the burner tip to the outlet opening, which, when the burner comprises a terminal section, corresponds to the sum of the length Lc of the burner chamber and the length Ls of the terminal section, and which, if no terminal section is present, corresponds merely to the length Lc of the burner chamber (Ls being equal to zero), is advantageously:
- Not less than 40 mm and preferably not less than 50 mm, thereby enabling maximized heat generation proximate the channel wall, and
- not more than 220 mm and more preferably not more than190 mm.

The cross-sectional area So of the outlet opening in the plane perpendicular to the axis is not less than 200 mm² and preferably not less than 300 mm², and not more than 2500 mm² and preferably not more than 2000 mm².

It is known in the art to use, in particular in channels for transporting molten material, burners having an outlet opening which is not perpendicular to the axis of the burner block. It is indeed known to use burners having an outlet opening which is inclined with respect to the axis or which is otherwise shaped so that at least one part of the outlet opening extends further away from the chamber inlet than another part of said outlet opening. It is, for example, known to have the top end of the outlet opening extend further away than the bottom end of the outlet opening so as to create an overhang, thereby maximizing downwards heat radiation. The reverse is also possible.

In the context of the present invention, when the outlet opening of the burner is not perpendicular to the axis:
- Lt is the length, along the axis, from the inlet opening of the burner block to the part of the outlet opening of the refractory block nearest to the chamber inlet,
- Lc + Ls (whereby, as indicated above, in the absence of a terminal section, Ls = 0) is the length, along the axis, from the chamber inlet to the part of the outlet opening nearest to the chamber inlet,
- when Ls ≠ 0, Ls is the length, along the axis, from the terminal section inlet to the part of the outlet opening nearest to the chamber inlet and therefore also nearest to the terminal section inlet, and
- So is the free cross-sectional area of the burner chamber or of the terminal section, as the case may be, in the plane perpendicular to the axis comprising the part of the outlet opening nearest to the chamber inlet.

In the context of the present invention, the terms 'chamber'(other than "combustion chamber") and 'section' thus refer to a volume within the refractory block circumferentially surrounded by a wall and does not include parts of the refractory block not fully circumferentially surrounded by a wall, such as the above-mentioned overhang, when present.

The present invention also covers the burners obtainable by any one of the embodiments of the above design method of the invention, as well as furnaces or combustion chambers comprising at least one such burner. The burner of the present invention is of particular interest for use in furnaces through which a material to be heated is transported and where it is described that a significant part of the heat supplied to the furnace is supplied in the vicinity of the lateral walls of the furnace, i.e. in the vicinity of the furnace walls substantially parallel to the transport direction of the material to be heated. A prime example of such a furnace are transport channels for molten material.

The invention thus covers in particular transport channels for molten material comprising at least one burner according to the present invention. Other examples are reheat furnaces for heating solid material transported through the furnace and ladles for molten metal. Preferably, the at least one burner according to the invention is mounted in a lateral wall of the transport channel.

The present invention is of particular interest when the transport channel is a channel in fluid connection with a glass-melting furnace, for receiving molten glass therefrom, and in fluid connection with glass-forming equipment, for supplying molten glass thereto.

The present invention furthermore relates to the use of a burner of the invention for combusting fuel with an oxidizer containing at least 23%vol O₂.

Useful possible oxidizers are oxygen-enriched air, mixtures of oxygen and flue gas, mixtures of oxygen and steam and mixtures of oxygen and CO₂.

The oxidizer advantageously comprises at least 50 %vol O₂, preferably at least 80%vol O₂.

The oxidizer is preferably substantially pure oxygen, i.e. an oxidizer comprising at least 90%vol O₂, more preferably at least 95 %vol O₂ and even more preferably at least 98%vol O₂.

The present invention also relates to the use of the burner obtainable by the design method for heating material transported through a furnace and in particular for heating molten material flowing through a transport channel. In that case, said burner is advantageously mounted in a lateral wall of said transport channel. Said use is particularly beneficial when the molten material to be heated is molten glass. However, the invention is also of benefit for heating molten metal, including molten metal alloys, or other molten material that needs uniform heating.

In use, the burner of the invention is advantageously operated at actual powers P' in the range from 0.5 to 1.5 times the nominal power Pn. In that case, the burner is advantageously operated so that 20 mN ≤ Ik' ≤ 125 mN, whereby Ik' = 0.5*(∑If' + ∑Iοx')*[(Lc + Ls)²/So],
- ∑If' being the total injection momentum of the fuel at the actual power P' at which the burner is operated , and
- ∑Iox' is the total injection momentum of the oxidizer at the actual power P' at which the burner is operated.

As the burner is designed for optimum operation at its nominal power Pn and corresponding total fuel and oxidizer injection momentums ∑If and ∑Iox, it is of interest, when designing a burner, to select values for ∑If and ∑Iox and therefore for Pn which correspond to the intended use of the burner and, when selecting a burner, to select a burner satisfying the design criteria for values of Pn, ∑If and ∑Iox which correspond to the intended use of said burner.

In use, the burner is preferably operated at powers P' between 0.8 and 1.2 times the nominal power Pn. In that case Ik' is preferably not less than 30mN and not more than 70 mN.

The present invention furthermore relates to a method of equipping a furnace or a combustion chamber with at least one burner of the invention.

When a furnace is being constructed (greenfield case) or is being thoroughly renovated (cold case), the method may comprise:
- mounting the refractory block of the burner into a wall of the furnace or combustion chamber, and
- mounting the injector assembly into the feed passage of the refractory block,
so as to obtain a burner of the invention.

More frequently, however, the method concerns cases (retrofit cases) whereby the refractory block is already mounted in a wall of the furnace or combustion chamber. In that case, the method of equipping the furnace comprises mounting the injector assembly into the feed passage of the refractory block, thereby obtaining a burner in accordance with one of the above-described embodiment of the invention.

In a refractory block which is already mounted in a wall of the furnace or combustion chamber, the total length Lt of the burner block along the axis, the length Ls of the optional terminal section along the axis and the cross sectional area So of the outlet opening in the plane perpendicular to the axis are already fixed.

However, as in accordance with the present invention, the burner tip coincides with the feed passage outlet, the length Lf of the feed passage along the axis is determined by the position of the burner tip when the injector assembly is mounted into said feed passage.

As furthermore, Lt = Lf + Lc + Ls and Lt and Ls are fixed, the length Lc of the burner chamber along the axis is likewise determined by the position of the burner tip when mounting the burner assembly into the feed passage of the refractory block.

The present invention thus makes it possible retrofit an existing furnace or combustion chamber and to equip same with a burner according to the present invention without having to replace a burner block which is already mounted in a wall of said furnace or combustion chamber.

In fact, the present invention even makes it possible to retrofit an existing furnace or combustion chamber and to equip same with a burner according to the invention without having to interrupt the operation of the furnace or combustion chamber.

The present invention includes such a method of equipping a furnace or combustion chamber with a burner of the present invention, whereby the furnace or combustion chamber comprises a pre-existing burner having a refractory block mounted in a wall of the furnace or combustion chamber, the method comprising, as described above, mounting an injector assembly into the refractory block of the pre-existing burner so as to obtain a burner according to one of the embodiments of the invention.

In this manner, it is, in particular, possible to replace the pre-existing burner with a burner of the invention having the same nominal power as the pre-existing burner.

This method is of particular interest when the pre-existing burner is an air-fuel burner.

The method according to the invention can thus be used to replace an air-fuel burner with an oxy-fuel burner of the invention and to provide an air-fuel furnace or combustion chamber with oxy-boosting or even to transform an air-fuel furnace or combustion chamber into an oxy-fuel furnace or combustion chamber.

The furnace or combustion chamber is preferably a transport channel, such as in particular a transport-channel for molten glass.

It is to be understood that the different embodiments described here above with respect to the method of designing the burner, to the burner as such, to its use, to the furnace and combustion chamber, and in particular to the transport channel also apply to the method of equipping in accordance with the invention.

In the present context:
- powers Pn and P' are expressed in kW,
- lengths Lt, Lf, Lc, Ls are expressed in mm,
- momentums Iox, Iox', If, If' and therefore ∑Iox, ∑Iox', ∑If and ∑If' are expressed in mN
- factors Ik, Ik' are expressed in mN,
- surface area So is expressed in mm².

The present invention permits to design burners suitable for combusting a wide range of fuels, including gaseous fuels such as natural gas, propane or gas from biomass, liquid fuels such as light fuel oil, heavy fuel oil or crude oil, and solid fuels such as coal.

The present invention makes it possible to provide robust burners adapted for the combustion of fuel with an oxygen-rich gas or substantially pure oxygen as the oxidizer in channels for transporting molten material, which, compared with air-fuel burners, do not present an increased risk of thermal damage to the burner, nor an increased occurrence of deposits on or near the burner tip positioned within the burner block, even when a major portion of the flame is confined within the burner block.

The present invention and its advantages are described in further detail hereafter, reference being made to figures 1 to 4, whereby:
- figure 1 is a schematic representation of back flow and flue gas recirculation phenomena in a burner mounted in a furnace wall as observed in prior art furnaces equipped with oxy-fuel burners,
- figure 2 is a schematic cross-section representation of an example of a burner design according to the invention which is symmetrical with respect to the burner axis and which has an outlet opening in a plane perpendicular to the axis,
- figure 3 is a schematic cross-section representation of an example of a burner design according to the invention which is partially asymmetrical with respect tot the axis and which has an outlet opening which is not located in a plane perpendicular to the axis, so that the burner block is partially asymmetrical with respect to the burner axis and includes an overhang as described above, and
- figure 4 is a schematic front perspective view of the burner of figure 3.

As explained above, back flow phenomena into the burner and recirculation of exhaust gases in the burner can lead to deposits on and proximate the burner tip, which in turn can lead to reduced burner efficiency, partial or total nozzle plugging or even burner block plugging and burner damage.

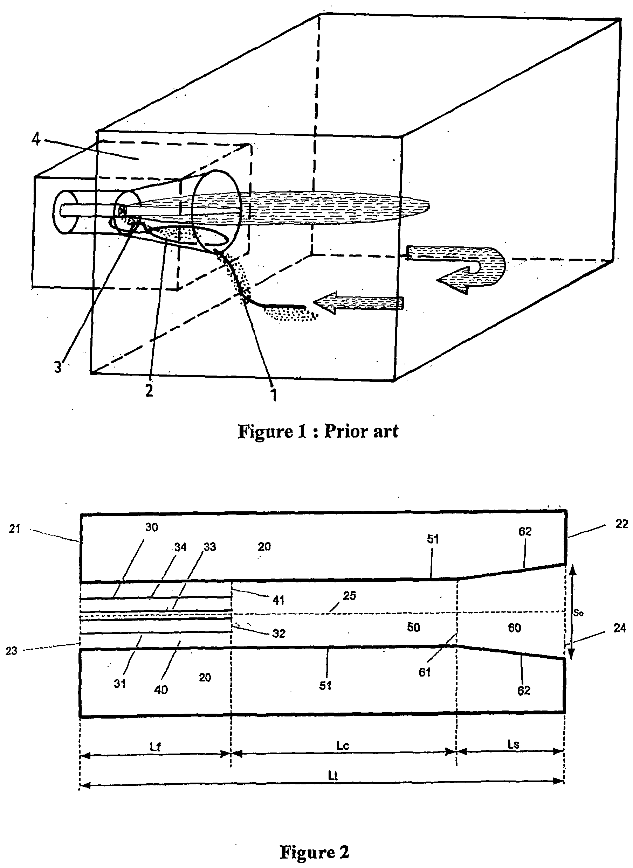

As shown in figure 1, materials present in the furnace atmosphere can be drawn into the burner block 4 by the back flow phenomenon (shown as arrow 1).

Whether back flow occurs and the extent to which it presents a potential problem depends mainly on the furnace design and operation and the type of process conducted in the furnace. Indeed, in furnaces having a furnace atmosphere substantially free of volatilized or entrained substances capable of forming deposits on relatively cooler surfaces, no problematic back flow will arise. On the other hand, in furnaces, such as molten glass transport channels, presenting an atmosphere rich in condensable matter, substantial back flow of such condensable matter into the burner block has to be avoided in order to prevent burner malfunction.

Flow patterns in the furnace atmosphere can also have an impact on whether back flow occurs and to what extent. For example, depending on the number of flue gas exhausts and their position with respect to the burner or burners, the furnace atmosphere may be drawn towards or away from the burners, or even towards some of the burners and away from others.

Another contributory factor can be the overpressure at which the furnace is operated in order to prevent ingress of ambient air. The higher the overpressure, the more likely is the occurrence of back flow.

Exhaust gas recirculation inside the burner block (shown as arrows 2 and 3) can be intentional or unintentional and depends mainly on burner design (block geometry, injector design) and operation (power, reactant flows, etc.).

When substances capable of forming deposits on cooler surfaces are generated by the combustion process or enter into the burner block 4 due to back flow and are thereafter brought into contact with the cooler burner tip and surrounding area of the burner, those substances form deposits on and proximate the burner tip giving rise to reduced burner efficiency, partial or total nozzle or even burner block plugging and burner damage. For example, deposits on the burner tip can lead to a change in the orientation of the flame, which not only decreases the furnace efficiency, but which may also lead to thermal damage of the burner block when the flame deviates from the burner axis.

It will be appreciated that, whereas it is possible, to a limited extent, for the furnace operator to vary the burner operation parameters, thereby varying the flue gas recirculation patterns (arrows 2 and 3) within the burner, it is generally not possible to vary the furnace design or significantly to vary the parameters of the process conducted in the furnace in order to prevent back flow (arrow 1) into the burner.

It has now surprisingly been found that the design method of the present invention significantly reduces the occurrence of deposits on or near the burner tip, without requiring adjustments in the burner operation parameters, in the furnace design or in the parameters of the process conducted in the furnace.

As shown in figures 2 to 4, the burner according to the present invention comprises a refractory block 20 and an injector assembly 30. The refractory block 20 has an inlet face 21 on one side and an outlet face 22 on the opposite site. Inlet face 21 comprises an inlet opening 23 and outlet face 22 comprises an outlet opening 24.

The burner axis 25 extends from the inlet opening 23, and the outlet opening 24 has a total length Lt (in mm). Refractory block 20 defines, in succession along axis 25 a feed passage 40, a burner chamber 50 and a terminal section 60.

Feed passage 40 leads into refractory block 20 via inlet opening 23 and terminates in feed passage outlet 41.

Lf is the length of feed passage 40 along axis 25. Burner chamber 50 has a chamber inlet which coincides with feed passage outlet 41.

In the illustrated embodiments, the chamber outlet coincides with the section inlet 61 of the terminal section 60.

Lc is the length of the burner chamber along burner axis 25. A chamber wall 51 circumferentially surrounds chamber 50 between the chamber inlet and the chamber outlet.

The angle α is the angle between the chamber wall and the axis (i.e. the angle between the intersection of the wall 51 with a plane through axis 25 on the one hand and axis 25 on the other hand). Angle α remains less than 3° throughout burner chamber 50. In other words, the burner chamber is cylindrical or at least substantially cylindrical,

In the embodiments illustrated in figures 2 to 4, α is constant and equal to zero, as the chamber wall 51 form a cylinder around axis 25. When the angle α is positive, the burner chamber widens slightly towards the outlet opening 24 of the burner.

Terminal section 60 widens towards outlet opening 24. It has a section inlet 61 which coincides with the burner chamber outlet and a section outlet which coincides with outlet opening 24 of the burner. Ls is the length of the terminal section along axis 25. A section wall 62 circumferentially surrounds terminal section 60 between the section inlet 61 and the section outlet. Section wall 62 forms at least one angle β with axis 25 which is greater than 5°. Angle β, between section wall 62 and axis 25, is determined in a manner analogous to the determination of angle α between chamber wall 51 and axis 25.

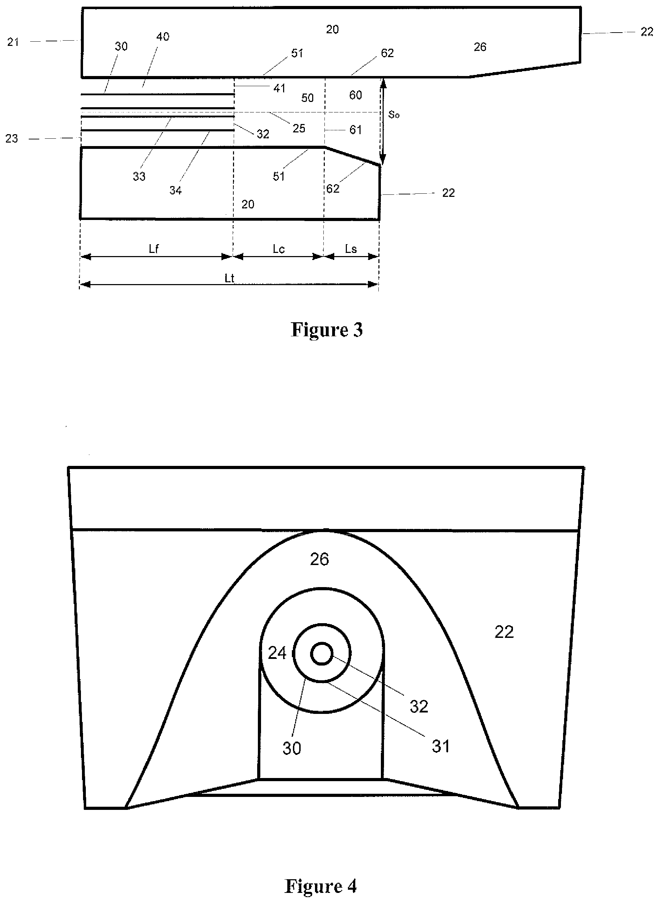

In the embodiment shown at figure 3, section wall 62 forms an angle β of about 18° with axis 25, on the lowermost side of the burner, whereas section wall 62 is parallel to axis 25 on the upper side of section 60.

The outlet opening 24 of the burner is located in a plane perpendicular to axis 25.

In the embodiment illustrated in figure 2, outlet face 22 is located in a plane perpendicular to axis 25.

In the embodiment illustrated in figures 3 and 4, outlet face 22 is not located in a plane perpendicular to axis 25.

Instead, the upper end of outlet face 22 extends further away from the chamber inlet at the upper end of the burner than at the lower end of the burner, thus creating an overhang 26 at the upper end of the burner.

The burner further comprises an injector assembly 30 with a pipe-in-pipe nozzle section 31 and terminating in burner tip 32. The injection assembly is mounted into feed passage 40 so that nozzle section 31 extends into feed passage 40 so that burner tip 32 coincides with passage outlet 41. The pipe-in-pipe nozzle section comprises an inner fuel supply passage 33 surrounded by an outer oxidizer supply passage 34.

It is a particular advantage of the present invention that it can be used both for retrofit and for greenfield cases.

In retrofit cases, a new injector assembly is mounted in an existing burner block.

Furnace operators, such as glass melters, are generally more inclined to change injector assemblies only rather than to change the entire burner including the burner block.

A major drawback when changing injector assemblies only is that the burner block typically has been designed specifically for optimized operation with the original injector assembly, so that, when the injector assembly is changed, the burner block design may not be optimal for the new injector assembly.

An inappropriate combination between the burner block and the injector assembly can result in:
- inefficient burner operation,
- a need to restrict the operational power range of the burner to prevent burner damage,
- overheating and even melting of the burner block and/or the injector assembly nozzle or nozzles,
- deposits on or proximate the injector assembly nozzle or nozzles that could lead to damage to injector and block.

In greenfield cases, or during major cold repairs, the entire burner, i.e. both the injector assembly and the burner block, can be replaced.

In that case, a burner block with an optimized design for the injector assembly can be installed.

In both retrofit and greenfield cases, the present invention makes it possible to use oxygen-rich gas or substantially pure oxygen as the oxidizer for combustion without increasing the occurrence of deposits on or near the burner tip positioned within the burner block compared with known air-fuel burner operation.

It is further advantage of the present invention that, due to the optimized design method, the heat resistance requirements for the material out of which the injector assembly and in particular the nozzle section and the burner tip are made are less stringent.

Consequently, depending on the process conditions in the furnace, it can be possible to use less noble and consequently less expensive materials, such as stainless steel, for the nozzle section and the burner tip without impairing the longevity of burner operation.

### Example

The following industrial example illustrates the benefits offered by the use of a burner according to the present invention in an industrial transport channel for molten glass.

In an industrial forehearth channel for transporting molten glass from a melting furnace to forming machines for shaping high quality container glass for the perfume industry, side-wall mounted burners using air as the oxidizer for combustion were used to compensate for heat losses through the channel walls. These burners were continuously operated during several months without any maintenance or repair intervention being required.

The glass manufacturer sought to decrease the rate of rejects and to reduce fuel consumption, both aspects being important factors for the efficiency and profitability of the process.

The perfume industry requires atypical designs for perfume bottles. In these designs parts of the bottle or even the entire bottle are frequently of very small glass thickness. As a consequence, when the temperature of glass is not sufficiently homogeneous, cracks appear in those parts of the bottle where the thickness of glass layer is the smallest, leading to a higher rate of rejects and lower productivity.

In order to improve energy efficiency, in one zone of the channel, the glass manufacturer switched to prior-art oxy-fuel burner injectors using substantially pure oxygen (>99%vol O₂) and specifically designed for use in glass feeders.

Switching from air combustion to oxygen combustion reduced fuel consumption by 58%.

Furthermore, the difference between the molten glass temperature at the center of the channel and the molten glass temperature in the vicinity of the channel walls at the end of the channel dropped from 380 to 220 K, thereby decreasing the rate of rejects of the final products by 27%.

Despite these significant improvements in energy efficiency and product quality, the use of these prior-art oxy-fuel burner injectors presented significant drawbacks for the glass manufacturer.

Indeed, within days following the start-up of the oxy-fuel burner injectors the customer faced important maintenance issues. Soot had formed on the tips of the oxy-fuel burner injectors and glass deposits had formed inside the burner blocks and on the burners' nozzles.

The only way to achieve continued operation of the oxy-fuel burner operation - and to avoid block and/or injector overheating or melting - consisted in removing and cleaning each oxy-fuel injector once a week.

The 16 oxy-fuel burner injectors were continuously used during three years and hence were cleaned - or replaced when the cleaning was no longer possible-each week during three years. In addition, several blocks had to be replaced too because of the increasing amount of glass deposits inside. The cleaning operation took up half day for one engineer every week. In total, the engineer spent roughly eighty days on cleaning and repair interventions over the three years.

In the light of the additional costs related to replacement of burner injectors and blocks and related to additional labor cost for the engineer in charge of the cleaning of burners, the decreases of the rate of rejects and of fuel consumption were less appreciable. Moreover, the frequent burner maintenance, which requires interrupting burner operation, led to instability and less homogeneous heating of the glass, resulting both in a small increase by a few percent of the rate of rejects of final products and in a small increase by a few percent also of the fuel consumption during one or two days following the maintenance intervention.

In order to overcome the burner maintenance issue, the prior-art oxy-fuel burner injectors were replaced with oxy-fuel burner injectors according to the invention designed for the same nominal power Pn, the same fuel and the same oxidizer and were made out of the same materials as the prior-art oxy-fuel burner injectors. In contrast with the prior-art oxy-fuel burner injectors, the design of the oxy-fuel burner injectors of the present invention was suitably positioned inside the recommended range of 35 to 60 mN.

After the replacement, the soot formation and the glass deposits issues were found to have been solved. Burners were operated during several months without any need for maintenance for either injector assembly or burner or block. In addition, the operation of these burners with suitable value for I_{K} permitted to improve the homogeneity of the temperature of the molten glass even more thanks to an improved position of the hot spot of the flame, thereby increasing the suitably located heat transfer towards the molten glass even when the firing and thus operational power rate of the burner was changed. The difference at the end of the channel between the temperature of the molten glass at the center of the channel and the temperature of the molten glass near the channel's walls decreased to 180 K. This improvement resulted in both an additional decrease of the rate of rejects of final products and an additional reduction of fuel consumption. In comparison with original fully air-fuel combustion transport channel operation, the rate of rejects was finally decreased by 35% and the fuel consumption was decreased by 64%. Furthermore, the forehearth system was much more stable since frequent maintenance on burner injectors and blocks was no longer required.

## Claims

1. Method of designing a burner for combusting a fuel with an oxidizer containing at least 23%vol O₂ and suitable for heating molten material in a transport channel, the burner comprising refractory block (20) and an injector assembly (30) and presenting a nominal power Pn, a total injection momentum ∑If of the fuel at the nominal power Pn and a total injection momentum ∑Iox of the oxidizer at the nominal power Pn,
- the refractory block (20) having on one side an inlet face (21) with an inlet opening (23) and on an opposite side an outlet face (22) with an outlet opening (24),
- the refractory block defining in succession along an axis (25) extending from the inlet opening (23) to the outlet opening (24) and having a total length Lt: a feed passage (40), a burner chamber (50) and an optional terminal section (60), said outlet opening (24) having a cross sectional area So in the plane perpendicular to the axis,
(a) the feed passage (40) leading into the refractory block (20) from the inlet opening (23) to a downstream feed passage outlet (41), said feed passage having a length Lf>0 along the axis (25) from the inlet opening (23) to the feed passage outlet (41),
(b) the injector assembly (30) terminating in a burner tip (31) and being mounted into the feed passage (40) so that the burner tip (31) coincides with the feed passage outlet (40),
(c) the burner chamber (50) having a chamber inlet, a chamber outlet and a chamber wall surrounding the burner chamber and connecting the chamber inlet to the chamber outlet, the chamber inlet coincides with the feed passage outlet (41), the chamber wall defines an angle α ≥ 0° and ≤ 3° with the axis (25), the burner chamber (50) having a length Lc >0 along the axis (25) from the chamber inlet to the chamber outlet,
(d) the optional terminal section (60) widening towards the outlet opening (24) and having a length Ls ≥ 0 along the axis (25),
whereby:
- Lc/(Lc + Ls) > 2/3,
- when Ls = 0, the burner does not include the optional terminal section (60), and the chamber outlet coincides with the outlet opening (24),
- when Ls > 0, the burner includes the optional terminal section, said terminal section then having a section inlet (61) and a section outlet and a section wall (62) surrounding the terminal section and connecting the section inlet (61) to the section outlet, the section inlet (61) coinciding with the chamber outlet, the section outlet coinciding with the outlet opening (24) and the section wall (62) defining at least one angle β > 5° with the axis (25),
**characterized in that** the method comprises selecting the burner chamber length Lc, the terminal section length Ls and the outlet opening (24) cross-sectional area So perpendicular to the axis (25) so that 30 mN ≤ Ik ≤ 70 mN,
whereby Ik = 0.5*(∑If + ∑Iox)*[(Lc + Ls)²/So].

2. Method according to claim 1, whereby 35 mN ≤ Ik ≤ 60 mN.

3. Method according to any one of the preceding claims, whereby 1.6 mN ≤ Iox ≤ 4.0 mN.

4. Method according to any one of the preceding claims whereby 2.4 mN ≤ If ≤ 3.2 mN.

5. Method according to any one of the preceding claims whereby 40 mm ≤ (Lc + Ls) ≤ 220 mm and preferably 50 mm ≤ (Lc + Ls) ≤ 190 mm

6. Method according to any one of the preceding claims whereby 200 mm² ≤ So ≤ 2500 mm² and preferably 300 mm² ≤ So ≤ 2000 mm²

7. Use of a burner for combusting a fuel with an oxidizer containing at least 23%vol O₂ and suitable for heating molten material in a transport channel, the burner presenting a nominal power Pn and comprising a refractory block (20) and an injector assembly (30),
- the refractory block (20) having on one side an inlet face (21) with an inlet opening (23) and on an opposite side an outlet face (22) with an outlet opening (24),
- the refractory block defining in succession along an axis (25) extending from the inlet opening (23) to the outlet opening (24) and having a total length Lt: a feed passage (40), a burner chamber (50) and an optional terminal section (60), said outlet opening (24) having a cross sectional area So in the plane perpendicular to the axis,
(a) the feed passage (40) leading into the refractory block (20) from the inlet opening (23) to a downstream feed passage outlet (41), said feed passage having a length Lf>0 along the axis (25) from the inlet opening (23) to the feed passage outlet (41),
(b) the injector assembly (30) terminating in a burner tip (31) and being mounted into the feed passage (40) so that the burner tip (31) coincides with the feed passage outlet (40),
(c) the burner chamber (50) having a chamber inlet, a chamber outlet and a chamber wall surrounding the burner chamber and connecting the chamber inlet to the chamber outlet, the chamber inlet coincides with the feed passage outlet (41), the chamber wall defines an angle α ≥ 0° and ≤ 3° with the axis (25), the burner chamber (50) having a length Lc >0 along the axis (25) from the chamber inlet to the chamber outlet,
(d) the optional terminal section (60) widening towards the outlet opening (24) and having a length Ls ≥ 0 along the axis (25),
whereby:
- Lc/(Lc + Ls) > 2/3,
- when Ls = 0, the burner does not include the optional terminal section (60), and the chamber outlet coincides with the outlet opening (24),
- when Ls > 0, the burner includes the optional terminal section, said terminal section then having a section inlet (61) and a section outlet and a section wall (62) surrounding the terminal section and connecting the section inlet (61) to the section outlet, the section inlet (61) coinciding with the chamber outlet, the section outlet coinciding with the outlet opening (24) and the section wall (62) defining at least one angle β > 5° with the axis (25), and
**characterized in that** 30 mN ≤ Ik ≤ 70 mN, whereby Ik = 0.5*(∑If + ∑Iox) * [(Lc + Ls)²/So] with ∑If = total injection momentum of the fuel at the nominal power Pn and ∑Iox = total injection momentum of the oxidizer at the nominal power Pn.

8. Use according to claim 7 for heating molten material flowing through a transport channel for molten material.

9. Use according to claim 8, whereby said at least one burner is mounted in a lateral wall of the transport channel.

10. Use according to claim 7, whereby the oxidizer contains at least 23%vol O₂, preferably at least 50 %vol O₂, more preferably at least 80%vol O₂.

11. Use according to any one of claims 7 to 10, whereby the burner is operated at powers P' between 0.5 and 1.5 times the nominal power Pn.

12. Use according to claim 11, whereby the burner is operated so that 20 mN ≤ Ik' ≤ 125 mN, whereby:
- Ik' = 0.5*(∑If' + ∑Iοx') * [(Lc + Ls)²/So],
- ΣIf' is the total injection momentum of the fuel at the power P',
- and ∑Iox' is the total injection momentum of the oxidizer at the power P'.

13. Use according to claim 11 or 12, whereby the burner is operated at powers P' between 0.8 and 1.2 times the nominal power Pn.

14. Use according to claim 13, whereby 30 mN ≤ Ik' ≤ 70 mN.

## Patentansprüche

1. Verfahren zum Entwurf eines Brenners zum Verbrennen eines Brennstoffs mit einem Oxidationsmittel, das mindestens 23 Vol.-% O₂ enthält und zum Erwärmen von geschmolzenem Material in einem Transportkanal geeignet ist, wobei der Brenner einen feuerfesten Block (20) und eine Einspritzanordnung (30) umfasst und eine Nennleistung Pn, ein Gesamteinspritzmoment ∑If des Brennstoffs bei der Nennleistung Pn und ein Gesamteinspritzmoment ∑Iox des Oxidationsmittels bei der Nennleistung Pn umfasst,
- der feuerfeste Block (20) auf einer Seite eine Einlassseite (21) mit einer Einlassöffnung (23) und auf einer gegenüberliegenden Seite eine Auslassseite (22) mit einer Auslassöffnung (24) aufweist,
- der feuerfeste Block, der aufeinanderfolgend entlang einer Achse (25), die sich von der Einlassöffnung (23) zur Auslassöffnung (24) erstreckt und eine Gesamtlänge Lt aufweist, definiert: einen Zufuhrdurchgang (40), eine Brennerkammer (50) und einen optionalen Endabschnitt (60), wobei die Auslassöffnung (24) eine Querschnittsfläche So in der Ebene senkrecht zur Achse aufweist,
(a) der Zufuhrdurchgang (40) in den feuerfesten Block (20) von der Einlassöffnung (23) zu einem stromabwärtigen Zufuhrdurchgang (41) führt, wobei der Zufuhrdurchgang eine Länge Lf > 0 entlang der Achse (25) von der Einlassöffnung (23) zum Auslass (41) des Zufuhrdurchgangs aufweist,
(b) die Einspritzanordnung (30) in einer Brennerspitze (31) endet und so in dem Zufuhrkanal (40) montiert ist, dass die Brennerspitze (31) mit dem Auslass (40) des Zufuhrdurchgangs zusammenfällt,
(c) die Brennerkammer (50) einen Kammereinlass, einen Kammerauslass und eine Kammerwand aufweist, welche die Brennerkammer umgibt und den Kammereinlass mit dem Kammerauslass verbindet, wobei der Kammereinlass mit dem Auslass (41) des Zufuhrkanals zusammenfällt, wobei die Kammerwand einen Winkel α ≥ 0° und ≤ 3° mit der Achse (25) definiert, wobei die Brennerkammer (50) eine Länge Lc > 0 entlang der Achse (25) vom Kammereinlass zum Kammerauslass aufweist,
(d) sich der optionale Endabschnitt (60) in Richtung der Auslassöffnung (24) aufweitet und eine Länge Ls ≥ 0 entlang der Achse (25) aufweist,
wobei:
- Lc/(Lc + Ls) > 2/3,
- wenn Ls = 0 ist, der Brenner den optionalen Endabschnitt (60) nicht aufweist und der Kammerauslass mit der Auslassöffnung (24) zusammenfällt,
- wenn Ls > 0 ist, der Brenner den optionalen Endabschnitt aufweist, wobei der Endabschnitt dann einen Abschnittseinlass (61) und einen Abschnittsauslass und eine Abschnittswand (62), die den Endabschnitt umgibt und den Abschnittseinlass (61) mit dem Abschnittsauslass verbindet, aufweist, wobei der Abschnittseinlass (61) mit dem Kammerauslass zusammenfällt, wobei der Abschnittsauslass mit der Auslassöffnung (24) zusammenfällt und die Abschnittswand (62) mindestens einen Winkel β > 5° mit der Achse (25) definiert,
**dadurch gekennzeichnet, dass** das Verfahren das Auswählen der Brennkammerlänge Lc, der Endabschnittslänge Ls und der Querschnittsfläche So der Auslassöffnung (24) senkrecht zu der Achse (25) umfasst, so dass 30 mN ≤ Ik ≤ 70 mN ist, wobei Ik = 0,5*(∑*If* + ∑*Iox*)*[(Lc + Ls)²/So] ist.

2. Verfahren nach Anspruch 1, wobei 35 mN ≤ Ik ≤ 60 mN ist.

3. Verfahren nach einem der vorstehenden Ansprüche, wobei 1,6 mN ≤ Iox ≤ 4,0 mN ist.

4. Verfahren nach einem der vorstehenden Ansprüche, wobei 2,4 mN ≤ If ≤ 3,2 mN ist.

5. Verfahren nach einem der vorstehenden Ansprüche, wobei 40 mm ≤ (Lc + Ls) ≤ 220 mm und vorzugsweise 50 mm ≤ (Lc + Ls) ≤ 190 mm ist.

6. Verfahren nach einem der vorstehenden Ansprüche, wobei 200 mm² ≤ So ≤ 2500 mm² und vorzugsweise 300 mm² ≤ So ≤ 2000 mm² ist.

7. Verwendung eines Brenners zum Verbrennen eines Brennstoffs mit einem Oxidationsmittel, das mindestens 23 Vol.-% O₂ enthält und zum Erwärmen von geschmolzenem Material in einem Transportkanal geeignet ist, wobei der Brenner eine Nennleistung Pn aufweist und einen feuerfesten Block (20) und eine Einspritzanordnung (30) umfasst,
- der feuerfeste Block (20) auf einer Seite eine Einlassseite (21) mit einer Einlassöffnung (23) und auf einer gegenüberliegenden Seite eine Auslassseite (22) mit einer Auslassöffnung (24) aufweist,
- der feuerfeste Block aufeinanderfolgend entlang einer Achse (25), die sich von der Einlassöffnung (23) zur Auslassöffnung (24) erstreckt und eine Gesamtlänge Lt aufweist, definiert: einen Zufuhrdurchgang (40), eine Brennerkammer (50) und einen optionalen Endabschnitt (60), wobei die Auslassöffnung (24) eine Querschnittsfläche So in der Ebene senkrecht zur Achse aufweist,
(a) der Zufuhrdurchgang (40) in den feuerfesten Block (20) von der Einlassöffnung (23) zu einem stromabwärtigen Zufuhrdurchgang (41) führt, wobei der Zufuhrdurchgang eine Länge Lf > 0 entlang der Achse (25) von der Einlassöffnung (23) zum Auslass (41) des Zufuhrdurchgangs aufweist,
(b) die Einspritzanordnung (30) in einer Brennerspitze (31) endet und so in dem Zufuhrkanal (40) montiert ist, dass die Brennerspitze (31) mit dem Auslass (40) des Zufuhrdurchgangs zusammenfällt,
(c) die Brennerkammer (50) einen Kammereinlass, einen Kammerauslass und eine Kammerwand aufweist, welche die Brennerkammer umgibt und den Kammereinlass mit dem Kammerauslass verbindet, wobei der Kammereinlass mit dem Auslass (41) des Zufuhrkanals zusammenfällt, wobei die Kammerwand einen Winkel α ≥ 0° und ≤ 3° mit der Achse (25) definiert, wobei die Brennerkammer (50) eine Länge Lc > 0 entlang der Achse (25) vom Kammereinlass zum Kammerauslass aufweist,
(d) sich der optionale Endabschnitt (60) in Richtung der Auslassöffnung (24) aufweitet und eine Länge Ls ≥ 0 entlang der Achse (25) aufweist,
wobei:
- Lc/(Lc + Ls) > 2/3,
- wenn Ls = 0 ist, der Brenner den optionalen Endabschnitt (60) nicht aufweist und der Kammerauslass mit der Auslassöffnung (24) zusammenfällt,
- wenn Ls > 0 ist, der Brenner den optionalen Endabschnitt aufweist, wobei der Endabschnitt dann einen Abschnittseinlass (61) und einen Abschnittsauslass und eine Abschnittswand (62), die den Anschlussabschnitt umgibt und den Abschnittseinlass (61) mit dem Abschnittsauslass (verbindet, aufweist, wobei der Abschnittseinlass (61) mit dem Kammerauslass zusammenfällt, wobei der Abschnittsauslass mit der Auslassöffnung (24) zusammenfällt und die Abschnittswand (62) mindestens einen Winkel β > 5° mit der Achse (25) definiert, und
**dadurch gekennzeichnet, dass** 30mN≤Ik<70mN ist, wobei Ik = 0,5*(∑*If* + ∑*Iox*)***[(Lc + Ls)²/So] ist, wobei ∑*If* = Gesamteinspritzmoment des Brennstoffs bei der Nennleistung Pn und ∑*Iox* = Gesamteinspritzmoment des Oxidationsmittels bei der Nennleistung Pn ist.

8. Verwendung nach Anspruch 7 zum Erwärmen von geschmolzenem Material, das durch einen Transportkanal für geschmolzenes Material strömt.

9. Verwendung nach Anspruch 8, wobei der mindestens eine Brenner in einer lateralen Wand des Transportkanals montiert ist.

10. Verwendung nach Anspruch 7, wobei das Oxidationsmittel mindestens 23 Vol.-% O₂ enthält, vorzugsweise mindestens 50 Vol.-% O₂, mehr bevorzugt mindestens 80 Vol.-% O₂.

11. Verwendung nach einem der Ansprüche 7 bis 10, wobei der Brenner bei Leistungen P' zwischen dem 0,5- und 1,5-fachen der Nennleistung Pn betrieben wird.

12. Verwendung nach Anspruch 11, wobei der Brenner so betrieben wird, dass 20 mN ≤ Ik' ≤ 125 mN ist, wobei:
- Ik' = 0,5*(∑*If* + ∑*Iox*)*[(Lc + Ls)²/So] ist,
- ∑*If'* das Gesamteinspritzmoment des Brennstoffs bei der Leistung P' ist,
- ∑*Iox'* das Gesamteinspritzmoment des Oxidationsmittels bei der Leistung P' ist.

13. Verwendung nach einem der Ansprüche 11 bis 12, wobei der Brenner bei Leistungen P' zwischen dem 0,8- und 1,2-fachen der Nennleistung Pn betrieben wird.

14. Verwendung nach Anspruch 13, wobei 30 mN ≤ Ik' ≤ 70 mN ist.

## Revendications

1. Procédé de conception d'un brûleur pour bruler un carburant avec un oxydant contenant au moins 23 % en volume d'O₂ et approprié pour chauffer une matière fondue dans un canal de transport, le brûleur comprenant un bloc réfractaire (20) et un ensemble injecteur (30) et présentant une puissance nominale Pn, une quantité de mouvement d'injection totale ∑If du carburant à la puissance nominale Pn et une quantité de mouvement d'injection totale ∑Iox de l'oxydant à la puissance nominale Pn,
- le bloc réfractaire (20) ayant sur un côté une face d'entrée (21) avec une ouverture d'entrée (23) et sur un côté opposé une face de sortie (22) avec une ouverture de sortie (24),
- le bloc réfractaire définissant en succession le long d'un axe (25) s'étendant à partir de l'ouverture d'entrée (23) jusqu'à l'ouverture de sortie (24) et ayant une longueur totale Lt : un passage d'alimentation (40), une chambre de brûleur (50) et une section terminale facultative (60), ladite ouverture de sortie (24) ayant une section transversale So dans le plan perpendiculaire à l'axe,
(a) le passage d'alimentation (40) conduisant jusque dans le bloc réfractaire (20) à partir de l'ouverture d'entrée (23) jusqu'à une sortie de passage d'alimentation aval (41), ledit passage d'alimentation ayant une longueur Lf>0 le long de l'axe (25) à partir de l'ouverture d'entrée (23) jusqu'à la sortie de passage d'alimentation (41),
(b) l'ensemble injecteur (30) se terminant en un nez de brûleur (31) et étant monté dans le passage d'alimentation (40) de sorte que le nez de brûleur (31) coïncide avec la sortie de passage d'alimentation (40),
(c) la chambre de brûleur (50) ayant une entrée de chambre, une sortie de chambre et une paroi de chambre entourant la chambre de brûleur et reliant l'entrée de chambre à la sortie de chambre, l'entrée de chambre coïncide avec la sortie de passage d'alimentation (41), la paroi de chambre définit un angle α ≥ 0° et ≤ 3° avec l'axe (25), la chambre de brûleur (50) ayant une longueur Lc > 0 le long de l'axe (25) à partir de l'entrée de chambre jusqu'à la sortie de chambre,
(d) la section terminale facultative (60) s'élargissant vers l'ouverture de sortie (24) et ayant une longueur Ls ≥ 0 le long de l'axe (25),
de sorte que :
- Lc/(Lc+Ls)>2/3,
- quand Ls = 0, le brûleur n'inclut pas la section terminale facultative (60) et la sortie de chambre coïncide avec l'ouverture de sortie (24),
- quand Ls > 0, le brûleur inclut la section terminale facultative, ladite section terminale ayant alors une entrée de section (61) et une sortie de section et une paroi de section (62) entourant la section terminale et reliant l'entrée de section (61) à la sortie de section, l'entrée de section (61) coïncidant avec la sortie de chambre, la sortie de section coïncidant avec l'ouverture de sortie (24) et la paroi de section (62) définissant au moins un angle β > 5° avec l'axe (25),
**caractérisé en ce que** le procédé comprend la sélection de la longueur de chambre de brûleur Lc, de la longueur de section terminale Ls et de la surface en coupe transversale So d'ouverture de sortie (24) perpendiculaire à l'axe (25) de sorte que 30 mN ≤ Ik ≤ 70 mN,
avec Ik= 0.5*(∑If + ∑Iox)*[(Lc + Ls)²/So].

2. Procédé selon la revendication 1, dans lequel 35 mN ≤ Ik ≤ 60 mN.

3. Procédé selon l'une quelconque des revendications précédentes, dans lequel 1,6 mN ≤ Iox ≤ 4,0 mN.

4. Procédé selon l'une quelconque des revendications précédentes, dans lequel 2,4 mN ≤ If ≤ 3,2 mN.

5. Procédé selon l'une quelconque des revendications précédentes, dans lequel 40 mm ≤ (Lc + Ls) ≤ 220 mm et de préférence 50 mm ≤ (Lc + Ls) ≤ 190 mm.

6. Procédé selon l'une quelconque des revendications précédentes, dans lequel 200 mm² ≤ So ≤ 2500 mm² et de préférence 300 mm² ≤ So ≤ 2000 mm².

7. Utilisation d'un brûleur pour enflammer un carburant avec un oxydant contenant au moins 23 % en volume d'O₂ et approprié pour chauffer une matière fondue dans un canal de transport, le brûleur présentant une puissance nominale Pn et comprenant un bloc réfractaire (20) et un ensemble injecteur (30),
- le bloc réfractaire (20) ayant sur un côté une face d'entrée (21) avec une ouverture d'entrée (23) et sur un côté opposé une face de sortie (22) avec une ouverture de sortie (24),
- le bloc réfractaire définissant en succession le long d'un axe (25) s'étendant à partir de l'ouverture d'entrée (23) jusqu'à l'ouverture de sortie (24) et ayant une longueur totale Lt : un passage d'alimentation (40), une chambre de brûleur (50) et une section terminale facultative (60), ladite ouverture de sortie (24) ayant une section transversale So dans le plan perpendiculaire à l'axe,
(a) le passage d'alimentation (40) conduisant jusque dans le bloc réfractaire (20) à partir de l'ouverture d'entrée (23) jusqu'à une sortie de passage d'alimentation aval (41), ledit passage d'alimentation ayant une longueur Lf>0 le long de l'axe (25) à partir de l'ouverture d'entrée (23) jusqu'à la sortie de passage d'alimentation (41),
(b) l'ensemble injecteur (30) se terminant en un nez de brûleur (31) et étant monté dans le passage d'alimentation (40) de sorte que le nez de brûleur (31) coïncide avec la sortie de passage d'alimentation (40),
(c) la chambre de brûleur (50) ayant une entrée de chambre, une sortie de chambre et une paroi de chambre entourant la chambre de brûleur et reliant l'entrée de chambre à la sortie de chambre, l'entrée de chambre coïncide avec la sortie de passage d'alimentation (41), la paroi de chambre définit un angle α ≥ 0° et ≤ 3° avec l'axe (25), la chambre de brûleur (50) ayant une longueur Lc > 0 le long de l'axe (25) depuis l'entrée de chambre jusqu'à la sortie de chambre,
(d) la section terminale facultative (60) s'élargissant vers l'ouverture de sortie (24) et ayant une longueur Ls ≥ 0 le long de l'axe (25),
de sorte que :
- Lc/(Lc + Ls) > 2/3,
- quand Ls = 0, le brûleur n'inclut pas la section terminale facultative (60), et la sortie de chambre coïncide avec l'ouverture de sortie (24),
- quand Ls > 0, le brûleur inclut la section terminale facultative, ladite section terminale ayant alors une entrée de section (61) et une sortie de section et une paroi de section (62) entourant la section terminale et reliant l'entrée de section (61) à la sortie de section, l'entrée de section (61) coïncidant avec la sortie de chambre, la sortie de section coïncidant avec l'ouverture de sortie (24) et la paroi de section (62) définissant au moins un angle β > 5° avec l'axe (25), et
**caractérisé en ce que** 30 mN ≤ Ik ≤ 70 mN, avec Ik = 0,5*(∑If + ∑Iox)*[(Lc + Ls)²/So], avec ∑If = quantité de mouvement d'injection totale du carburant à la puissance nominale Pn et ∑Iox = quantité de mouvement d'injection totale de l'oxydant à la puissance nominale Pn.

8. Utilisation selon la revendication 7 pour chauffer une matière fondue s'écoulant à travers un canal de transport pour matière fondue.

9. Utilisation selon la revendication 8, dans laquelle ledit au moins un brûleur est monté dans une paroi latérale du canal de transport.

10. Utilisation selon la revendication 7, dans laquelle l'oxydant contient au moins 23 % en volume d'O₂, de préférence au moins 50 % en volume d'O₂, plus de préférence au moins 80 % en volume d'O₂.

11. Utilisation selon l'une quelconque des revendications 7 à 10, dans laquelle le brûleur est mis en oeuvre à des puissances P' entre 0,5 et 1,5 fois la puissance nominale Pn.

12. Utilisation selon la revendication 11, de sorte que le brûleur est mis en oeuvre de sorte que 20 mN ≤ Ik ≤ 125 mN, avec :
- Ik' = 0,5*(∑If' + ∑Iox')*[(Lc + Ls)²/So],
- ∑If' est la quantité de mouvement d'injection totale du carburant à la puissance P',
- et ∑Iox' est la quantité de mouvement d'injection totale de l'oxydant à la puissance P'.

13. Utilisation selon la revendication 11 ou 12, dans laquelle le brûleur est mis en oeuvre à des puissances P' entre 0,8 et 1,2 fois la puissance nominale Pn.

14. Utilisation selon la revendication 13, dans laquelle 30 mN ≤ Ik' ≤ 70 mN.
